# EUROPÄISCHE PATENTSCHRIFT

(11) **EP 2 095 068 B1**
(45) Veröffentlichungstag und Bekanntmachung des Hinweises auf die Patenterteilung: **23.01.2013**
(21) Anmeldenummer: 07856647.8
(22) Anmeldetag: 12.12.2007
(51) Int. Cl.: G01B 11/25, G01B 21/04, G06T 3/40

(54) **VORRICHTUNG UND VERFAHREN ZUR STEIGERUNG DER MESS-GENAUIGKEIT DIGITALER 3D-GEOMETRIEMESSYSTEME**
APPARATUS AND METHOD FOR INCREASING THE MEASUREMENT ACCURACY OF DIGITAL 3D GEOMETRY MEASURING SYSTEMS
DISPOSITIF ET PROCÉDÉ D'AUGMENTATION DE LA PRÉCISION DE MESURE DE SYSTÈMES NUMÉRIQUES À GÉOMÉTRIE EN 3D

(30) Priorität: 15.12.2006 DE 102006059416
(43) Veröffentlichungstag der Anmeldung: 02.09.2009
(73) Patentinhaber: Fraunhofer-Gesellschaft zur Förderung der angewandten Forschung e.V., 80686 München (DE)
(72) Erfinder: KOSTKA, Günther, 91056 Erlangen (DE); SCHMITT, Peter, 91058 Erlangen (DE)
(74) Vertreter: Schenk, Markus
(86) Internationale Anmeldenummer: PCT/EP2007/010900
(87) Internationale Veröffentlichungsnummer: WO 2008/071414

(56) Entgegenhaltungen:
- EP-A- 1 524 492
- DE-A1- 19 721 688
- US-A1- 2006 070 417
- CHRISTOPHER C. YANG, MICHAEL M. MAREFAT, FRANK W. CIARALLO: "Analysis of errors in dimensional inspection based on active vision" PROCEEDINGS OF SPIE, Bd. 2354, Oktober 1994 (1994-10), Seiten 96-104, XP002473955 doi:10.1117/12.189077
- SHIH-KANG KUO ET AL: "Development of a high-precision surface metrology system and its uncertainty analysis" MECHATRONICS, 2005. ICM '05. IEEE INTERNATIONAL CONFERENCE ON TAIPEI, TAIWAN 10-12 JULY 2005, PISCATAWAY, NJ, USA,IEEE, US, 10. Juli 2005 (2005-07-10), Seiten 945-952, XP010848072 ISBN: 0-7803-8998-0

## Beschreibung

Die vorliegende Erfindung befasst sich mit der Vermessung der Geometrie von 3-dimensionalen Objekten und insbesondere mit der Vermessung von deren Oberflächen und mit einem Verfahren und einer Vorrichtung zur Steigerung der Messgenauigkeit solcher Verfahren.

Die dreidimensionale Vermessung von Gegenständen bzw. von Oberflächen von Gegenständen hat in der industriellen Produktion eine Vielzahl von Anwendungen. Insbesondere zur Kontrolle von Produktionsergebnissen werden dabei Verfahren eingesetzt, die die schnelle Qualitätskontrolle ermöglichen, wie beispielsweise die Formvermessung von Kfz-Bremsscheiben oder die Vermessung von Kfz-Reifen auf einen eventuellen Höhen- oder Seitenschlag hin.

Mittels drei-dimensionaler Geometriemessverfahren können darüber hinaus beispielsweise mechanische Schwingungen von Oberflächen bestimmt werden oder es kann die Dicke von in mehreren Bahnen hergestellten Materialen, wie beispielsweise Blechen oder Papieren vermessen werden. Während einige Anwendungen darauf abzielen, die genaue geometrische Gestalt der Oberfläche eines Objektes zu bestimmen, zielen andere Verfahren eher darauf, die Einhaltung eines Parameters in lediglich einer geometrischen Dimension zu kontrollieren. Bei glatten Oberflächen ist dabei beispielsweise meist interessant, ob die Oberflächen eine Rauhigkeit bzw. Welligkeit aufweist, die unterhalb eines bestimmten Grenzwertes liegt. Allgemein könnte man beispielsweise eine glatte Oberfläche sogar dadurch definieren, dass die laterale Strukturierung der Oberfläche deutlich geringer ist als die erwünschte Messgenauigkeit in Richtung der Oberflächennormale.

Die schnelle Erfassung, Vermessung und Überprüfung der Geometrie von industriell hergestellten Produkten ist, wie bereits erwähnt, ein wichtiges Anwendungsgebiet von berührungslosen 3D-Messsystemen. Üblicherweise sind solche Systeme digital, d. h. sie verwenden digitalisierte Messwerte von Messgebern mit einer endlichen Digitalisierungsauflösung. Quantisierungsfehler können dabei zum Einen durch die Digitalisierung ursprünglich analoger Messwerte oder durch per se quantisierte Detektoren, wie beispielsweise CCD-Kameras hervorgerufen werden.

Standardverfahren zur Vermessung von Oberflächen sind dabei die punktweise arbeitende taktile Formvermessung durch mechanische Messtaster, welche über die Oberfläche des zu vermessenden Objektes rasternd geführt werden. Ein weiteres Verfahren hoher Auflösung ist die Lasertriangulation. Der große Nachteil dieser Verfahren besteht dabei darin, dass die Oberfläche des Objekte punktweise, also gerastert abgetastet werden muss, was äußerst zeitaufwändig ist. Aufgrund der außerordentlich hohen erreichbaren Messgeschwindigkeit gewinnt das Lichtschnittverfahren bei der 3D-Formerfassung zunehmend an Bedeutung. Beim Lichtschnittverfahren wird ein Messlichtstreifen bzw. ein Messstreifen auf eine Oberfläche des zu vermessenden Objektes projiziert und der Messlichtstreifen wird gleichzeitig von einer Kamera oder einem vergleichbaren Detektor aufgezeichnet. Durch die Lage des Messlichtstreifens im Kamerabild kann, bei Kenntnis der Geometrie zwischen Objekt, Kamera und Messlichtprojektor, auf die Topographie des zu vermessenden Objektes geschlossen werden. Der Vorteil dieses Verfahrens liegt vor allem an der gleichzeitigen parallelen Erfassung eines kompletten Höhenprofils entlang einer Linie. Die Tatsache, dass eine Linie in einem einzigen Messschritt vermessen werden kann, eröffnet die Möglichkeit, durch einfache Translations- oder Rotationsbewegungen des Objekts bzw. des Messsystems in Verbindung mit zeitlich eng aufeinander folgenden Messschritten ein komplettes Objekt in kurzer Zeit vollständig abzutasten und zu vermessen. Typische, für die Aufnahme des gesamten Objektes erforderliche Messzeiten liegen dabei im Sekundenbereich. Die erreichbare Messgenauigkeit ist, insbesondere bei sehr ausgedehnten Objekten, geringer als bei den Laser-Triangulationsverfahren oder der zeitaufwändigen Geometrie-Erfassung mittels taktiler Messtaster. Dies liegt in der prinzipiellen Funktionsweise des Lichtschnittprinzips begründet. Eine auf das Objekt projizierte Laserlinie oder Lichtlinie wird von einer parallaktisch verkippten Messkamera mittels Bildsensor mit einer endlichen Anzahl von Bildelementen (Pixeln) erfasst. Durch die Erfassung und Digitalisierung der Geometrie-Information mittels der Bestimmung der Koordinaten der Lichtlinie auf dem Sensor-Chip ergibt sich unmittelbar eine durch die Sensorauflösung (endliche Pixeldimension) limitierte Auflösung bzw. Höhenauflösung eines solchen Lichtschnittverfahrens. Typische Pixelzahlen in einer Dimension liegen dabei zwischen 1.000 und 2.000. Wird also die gesamte geometrische Fläche des Chips in einer Dimension zur Höhenmessung verwendet, was eine präzise Justage der Geometrie voraussetzt, liegt aufgrund der endlichen Pixelzahl auf dem Chip eine Digitalisierungsauflösung eines solchen Systems im Bereich von 1:1.000 bis 1:2.000. Der physikalisch zur Verfügung stehende Höhenmessbereich wird also in 1.000 bis 2.000 Werte aufgeteilt. Bei einem geometrisch prinzipiell möglichen Höhenmessbereich von beispielsweise 100 mm wird also eine Messauflösung von 0,1 mm erreicht.

Die exakte geometrische Dimensionierung ist dabei im Regelfall zusätzlich durch die verwendeten Bauelemente, wie beispielsweise die verwendete CCD oder die zur Abbildung verwendeten optischen Elemente begrenzt. Insbesondere ist bei einem System mit gegebener optischen Abbildungseigenschaft die Einstellung des Höhenmessbereichs nicht vollkommen unabhängig von der gewählten lateralen Breite des abgetasteten Messbereichs auf dem Objekt. Als Beispiel mag eine quadratische CCD mit 1.000 x 1.000 Pixeln dienen. Bei der Formerfassung eines typischen flachen Objekts, wie der Oberfläche einer Bremsscheibe, wird beispielsweise eine laterale Messbreite von 50 mm benötigt. Zusätzlich wird eine Höhenmessgenauigkeit von wenigen Mikrometern gefordert. Aufgrund der geforderten Breite ist jedoch die Abbildungsoptik so einzustellen, dass die CCD einen Bereich von 50 mm x 50 mm abbildet, falls das Objekt senkrecht beobachtet wird. Dies führt dann zu einer Höhenauflösung von maximal etwa 50 µm. Bei Bremsscheiben wird jedoch eine Höhenmessgenauigkeit von wenigen Mikrometern gefordert, was sich aufgrund obiger Überlegungen mit einem solchen System nicht direkt erreichen lässt.

Da, wie bereits beschrieben, die Höhenauflösung von Lichtschnittmessverfahren unter Anderem von der Geometrie bzw. der relativen Ausrichtung der Kamera zur Oberfläche des Objektes und zur Lichtprojektionseinrichtung abhängt, kann dadurch, dass der prinzipiell zur Verfügung stehende Höhenmessbereich eingeschränkt wird, die Höhenauflösung gesteigert werden. Dies kann dadurch erreicht werden, dass der Laser so angeordnet wird, dass der Laserfächerstrahl sehr flach auf die Objektoberfläche streifend einfällt (beispielsweise mit 80° gegenüber der Oberflächennormale) und gleichzeitig die Messkamera senkrecht dazu in eher vertikaler Richtung positioniert wird. Aufgrund der Geometrie führt somit eine leichte Höhenänderung auf der Oberfläche des zu untersuchenden Objekts zu einer starken Änderung der Position des projizierten Lichtstreifens. Allerdings führt eine solche Anordnung auch dazu, dass die Position des Lichtschnitts auf der Oberfläche stark von der Objekthöhe abhängt und dadurch lateral "wandert", wenn sich die Objekthöhe ändert. Auch führt die oben beschriebene Konfiguration mit sehr flachem Einfallswinkel des Laserstrahls zu einem sehr geringem Arbeitsabstand zwischen Messmittel und Objektoberfläche, was oftmals aufgrund der räumlichen Situation und den erforderlichen Sicherheitsmaßnahmen (Mindestabstand der Messtechnik vom Objekt) nicht erwünscht oder möglich ist.

Im Allgemeinen ist festzuhalten, dass eine solche starke Einschränkung des prinzipiell zur Verfügung stehenden Höhenmessbereichs für industrielle Anwendungen nicht vorteilhaft und erwünscht ist, da dadurch kaum mehr Flexibilität in der Anwendung auf unterschiedliche zu vermessende Oberflächen besteht.

Um die Messgeschwindigkeit von Lichtschnittmesssystemen zu erhöhen, kommt typischerweise ein spezialisierter Sensor zum Einsatz, der die Signalauswertung bereits auf dem Sensorchips selbst ermöglicht. Üblicherweise wird dazu eine Vorzugsrichtung auf dem Sensor definiert, in der die Abbildung der Höheninformation des Lichtstreifens auf dem Sensor erwartet wird, bzw. wird der Sensor so eingestellt, dass die Abbildung des Lichtmessstreifens in der Sensorvorzugsrichtung auf dem Sensor wandert. Die Auswertung der Messdaten auf dem Sensor ist dann so implementiert, dass je Pixelspalte in Vorzugsrichtung genau ein Abbildungsort definiert wird, welcher der Koordinate des hellsten Pixel in der dazugehörigen Spalte entspricht. Daher ist die Höhenauflösung automatisch durch die Quantisierung der Ortsauflösung des Sensors limitiert. Um statistische Fluktuationen (Photonenstatistik) und somit die Höhenauflösung weiter zu steigern, kann bei einem solchen Chip eine Mehrzahl von Detektions-Schwellwerten zur Bestimmung der Koordinaten der Lichtlinie auf dem Sensor-Chip verwendet werden, woraufhin die endgültige Koordinate durch Mittelung der mittels der unterschiedlichen Schwellwerte bestimmten Koordinaten festgelegt wird. Solche Methoden sind in jüngerer Vergangenheit in der neuesten Generation der Lichtschnitt-Kameras, beispielsweise der Firma Sick-IVP, verfügbar. Dies führt allerdings dazu, dass die verfügbare Messfrequenz effektiv deutlich verringert wird. Außerdem führt ein solches Verfahren nur in einigen wenigen Fällen zu einer echten Steigerung der Höhenauflösung.

Prinzipiell kann die Auflösung auf einem Sensor, unabhängig davon ob dieser diskrete Sensorelemente besitzt oder nicht, durch Schwerpunktsbildung der vom Sensor detektierten Lichtverteilung auf dem Bildsensor algorithmisch bestimmt werden. In der Technik ist dieses Verfahren auch als COG-Verfahren (center-of-gravity) bekannt. Prinzipiell ist es mit einem solchen Verfahren möglich, die Auflösung bzw. die Genauigkeit, mit der das Abbild des Lichtschnittmessstreifens auf der Sensorfläche detektiert werden kann, nahezu beliebig zu erhöhen. In der Realität sind aufgrund von technischen Beschränkungen, wie beispielsweise des endlichen dynamischen Bereichs einzelner CCD-Pixel, Auflösungsverbesserungen bis zu maximal einem Faktor 10 möglich. Die dafür notwendigen Rechenoperationen sind typischerweise rechenzeitintensiv, wie die Anapassung von geeigneten Parametrisierungen mittels eines Least-Square-Fits. Sie müssen daher meist auf einem nachgeschalteten Rechner bzw. dedizierter Hardware ausgeführt werden. Dies führt, wie die oben diskutierten Verfahren zur Auflösungssteigerung, also im Allgemeinen zu einer deutlichen Reduzierung der maximal möglichen Messgeschwindigkeit.

Darüber hinaus ist zur Durchführung des COG-Verfahrens zwingende Voraussetzung, dass der Messlichtsteifen in Vorzugsrichtung mehrere Pixel auf einem Pixel-Sensor belichtet, die erforderlichen Minimalbreite der projizierten Laserlichtlinie auf dem Objekt verringert somit automatisch die erzielbare Ortsauflösung auf der Oberfläche des zu vermessenden Objektes. Allgemeiner gesprochen bestehen bestimmte limitierende Bedingungen bezüglich der erforderlichen Breite der projizierten Laserlichtlinie auf dem Objekt, wenn mittels des COG-Verfahrens die Steigerung der Auflösung erreicht werden soll, indem eine Vielzahl von Sensor-Pixeln für die Auswertung verwendet werden.

Wie bereits oben angedeutet, verfügen Lichtschnittsensoren im Allgemeinen über eine Vielzahl an einzelnen Messspuren beziehungsweise Pixelspalten, die gleichzeitig Geometrie-Messwerte liefern. Auch eine Zusammenfassung mehrerer solcher Messspuren zu einer effektiven neuen (breiteren) Messspur oder die Zusammenfassung von zeitlich nacheinander aufgenommenen Daten durch Mittelwertbildung, d.h. eine Verringerung der lateralen Auflösung führt im Allgemeinen nur zu einer Verbesserung des statistischen Verhaltens der Messung, d.h. zu einer Verringerung der Standardabweichung mehrerer aufeinander folgender Messungen oder zu einer Verbesserung der Reproduzierbarkeit der Messung, nicht aber zu einer Verbesserung der Messgenauigkeit. Solche Maßnahmen beeinflussen nicht den realen Abbildungsort des Messlichtstreifens auf der Sensoroberfläche, welche aufgrund ihres Konstruktionsprinzips eine Quantisierung der möglichen Koordinaten verursacht. Anschaulich gesprochen würde beispielsweise immer der gleiche (falsche, weil nur grob aufgelöste) Messwert gemittelt werden, was wiederum zu einem fehlerhaften Messwert führen würde. Wie oben dargestellt, existiert eine Reihe von Ansätzen, die Ortsauflösung bzw. die Höhenauflösung eines 3D-Geometrie-Messsystems zu verbessern, wobei diese alle den Nachteil mit sich bringen, dass die erforderliche Messdauer signifikant verlängert wird.

Die US 2006/070417 befasst sich damit, wie mittels eines Lichtschrittmessverfahrens die Oberfläche eines Materials bzw. dessen Flachheit bestimmt werden kann. Dabei zeigt das Dokument beispielsweise, dass ein Winkel einer Lichtebene, die mittels eines Lasers erzeugt wird, bezüglich der Oberfläche des zu untersuchenden Objekts variiert werden kann, um die gesamte Oberfläche des Objekts mit einer Kamera zu untersuchen. Da sich aufgrund des im Laufe der Messung veränderlichen Winkels die Perspektive der Kamera, unter der der Lichtmessstreifen aufgenommen wird, sowie die Winkel zwischen Kamera und Lichtmessstreifen ändern, ist zur Auswertung der Messung eine Kalibration erforderlich. Bei dieser werden zum einen die Höheninformationen und die Breiteninformationen, die aufgrund der Änderung der Perspektive während der Messung variieren, mit einem Testobjekt bestimmt, um daraus die Kalibrationsdaten zu gewinnen. Zur Auswertung der Kalibration werden kantenerhaltende Median-Filter angewendet und Schwerpunktsbestimmungen durchgeführt. Während des Messvorgangs wird der Lichtmessstreifen immer so geführt, dass die Abbildungsrichtung des Messstreifens auf dem Sensor mit einer der Quantisierungsrichtungen des zwei-dimensionalen Sensors zusammenfällt.

In XP-0024773955, Ch. C. Yang et al., "Analysis of errors in dimensional inspection based on active vision", SPIE Vol. 2354, Oct. 1994 wird beschrieben, wie sich die inhärenten Quantisierungsfehler durch Verwendung einer zwei-dimensionalen Pixel-Matrix auf einen Fehler bei der Bestimmung einer Länge einer Mittels der Pixel-Matrix abgebildeten Geraden auswirken. Diesbezüglich zeigt das Dokument insbesondere, dass es einen mathematischen Zusammenhang zwischen dem Fehler der Längenbestimmung und dem Winkel, unter dem die Gerade auf der Oberfläche des Sensors abgebildet wird, gibt.

EP1524492A beschreibt eine dreidimensionale Messapparatur, die Information über eine dreidimensionale Position eines Objekts auf Basis der Ermittlung einer Position von einem hellen Anteil, der im Wesentlichen linear erzeugt wird, durch Beleuchten mit Lichtschnitt oder Pseudo-Lichtschnitt, erzeugt durch Abtasten des Objekts mit Spotlicht, auf einem durch Bildaufnahmevorrichtungen aufgenommenen Bild des Objekts erhält. Die dreidimensionale Messapparatur ist mit mindestens den folgenden ausgestattet: einer Einrichtung zum Zählen der Anzahl aufgehellter Pixel, die zum hellen Anteil entlang jeder von einer Mehrzahl Ermittlungslinien gehören, die den hellen Anteil in dem aufgenommenen Bild durchqueren; einer Einrichtung zum Bestimmen eines zulässigen Bereichs für die Anzahl aufgehellter Pixel entlang einer Ermittlungslinie auf Basis der Anzahl aufgehellter Pixel, die jeweils entlang der Mehrzahl Ermittlungslinien gezahlt werden; und einer Einrichtung zum Aufnehmen von Daten der aufgehellten Pixel entlang jeder Ermittlungslinie, wobei die Anzahl aufgehellter Pixel in dem zulässigen Bereich liegt, als richtige Daten zum Erhalten der Information über die dreidimensionale Position des Objekts.

Es ist daher die Aufgabe der vorliegenden Erfindung, eine Vorrichtung und ein Verfahren zu schaffen, das die erzielbare Ortsauflösung eines digitalen 3D-Geometrie-Messsystems verbessern kann, ohne die Effizienz des Systems zu verringern.

Diese Aufgabe wird durch ein optisches Messsystem gemäß Patentanspruch 1 und ein Verfahren zum Vermessen der Oberfläche eines Objektes gemäß Patentanspruch 12 gelöst.

Der vorliegenden Erfindung liegt dabei die Erkenntnis zugrunde, dass die Auflösung eines optischen Messsystems zum Vermessen einer Oberfläche eines Objektes, bei dem mittels eines Matrixsensors mit einer in einer Quantisierungsrichtung durch Quantisierung begrenzten Auflösung ein Messlichtstreifen bzw. ein Messstreifen auf einer Oberfläche eines Objektes aufgenommen wird, dadurch verbessert werden kann, dass ein effektiver Abbildungsort in Quantisierungsrichtung basierend auf dem zugeordneten realen Abbildungsort und einem dem zugeordneten realen Abbildungsort in einer zur Quantisierungsrichtung senkrechten Richtung benachbarten weiteren realen Abbildungsort berechnet wird.

Besonders vorteilhaft können Objekte vermessen werden, deren Oberflächen plan sind, so dass diese keine Höhensprünge auf der Oberfläche zeigen, bzw. deren Oberflächenprofil keine steilen Gradienten aufweist.

Dabei wird die Steigerung der Höhenauflösung durch die Anwendung einer erfindungsgemäßen speziellen Anordnung der messtechnischen Komponente in Bezug auf das zu vermessende Objekt und einer entsprechenden Datenverarbeitung erreicht, wobei ein dem Noniusprinzip ähnliches Verfahren zum Einsatz kommt.

Bei einem Ausführungsbeispiel der vorliegenden Erfindung wird daher bei der Vermessung von planaren Oberflächen bewusst eine Auflösungsreduktion in lateraler Richtung, d. h. in der der Lichtschnittrichtung parallelen Richtung in Kauf genommen, um die Höhenauflösung dadurch zu steigern, dass ein effektiver Abbildungsort der Messlichtlinie auf dem Sensor durch Mittelung in lateraler Richtung benachbarter Abbildungsorte der Messlichtlinie auf dem Sensor erzeugt wird. Ist, wie bei einem weiteren Ausführungsbeispiel der vorliegenden Erfindung die geometrische Anordnung so gewählt, dass bei perfekt planer Oberfläche der Messlichtstreifen nicht parallel zur Vorzugsrichtung bzw. parallel zur Zeilen- oder Spaltenrichtung des Sensors verläuft, kann bei geeigneter Wahl des Winkels zwischen der lateralen Ausdehnungsrichtung des Messlichtstreifens und der Sensorachsen eine erhebliche Auflösungsverbesserung erreicht werden. Dies ist deswegen der Fall, da bei einer derart gewählten Geometrie lateral benachbarte Spalten bzw. Messspuren des Sensors selbst bei völlig planer Oberfläche unterschiedliche Abbildungsorte in Quantisierungsrichtung (derjenigen Richtung, in der die Höheninformation bestimmt wird) messen. Durch Mittelwertbildung lateral benachbarter Abbildungsorte kann somit die Auflösung über die intrinsische Sensorauflösung, welche durch die Pixelgrößen gegeben ist, verbessert werden. Wird der Winkel zwischen der lateralen Ausdehnung des Lichtmessstreifens und der Quantisierungsrichtung des Sensors geeignet eingestellt, kann die Höhenauflösung des Messsystems signifikant verbessert werden, so dass Auflösungsverbesserungen von mehr als dem 10-fachen möglich sind.

Mit anderen Worten kann die Messgenauigkeit von digitalen 3D-Geometriesystemen, wie beispielsweise dem Laser-Lichtschnittverfahren, dadurch gesteigert werden, dass die zu vermessende Oberfläche gegenüber der Basis-Messrichtung der Messanordnung (z. B. dem Lichtschnitt) in geeigneter Art und Weise verkippt wird und mehrere benachbarte Messwerte arithmetisch gemittelt werden. Die genaue Art und Weise der Verkippung bzw. die durch die Mittelung von benachbarten Messwerten erzielten Effekte werden im Folgenden näher erläutert.

Es werden im Folgenden bevorzugte Ausführungsbeispiele der vorliegenden Erfindung anhand der beigefügten Figuren näher erläutert. Es zeigen:
- Fig. 1: ein Ausführungsbeispiel eines optischen Messsystems mit eingestelltem Winkel zwischen Abbildungsrichtung und Quantisierungsrichtung;
- Fig. 2: eine schematische Darstellung zur Illustration des Messfehlers;
- Fig. 3: eine schematische Darstellung des erfindungsgemäßen Konzepts zur Verringerung des Messfehlers;
- Fig. 4: eine schematische Darstellung der Abhängigkeit der Verbesserung der Auflösung von der Geometrie-änderung;
- Fig. 5: eine Darstellung der Abhängigkeit der Auflösungsverbesserung von der Anzahl der zu berücksichtigenden Abbildungsorte;
- Fig. 6: eine schematische Darstellung der Abhängigkeit der Auflösungsverbesserung von einem Offset-Parameter;
- Fig. 7: eine schematische Darstellung der erzielbaren Auflösungsverbesserung in Abhängigkeit eines weiteren Offset-Parameters;
- Fig. 8: ein Blockdiagramm eines erfindungsgemäBen Verfahrens zum Vermessen der Oberfläche eines Objektes;
- Fig. 9: ein Blockdiagramm eines Verfahrens zum Verbessern der Auflösung eines Messsystems zum Vermessen der Oberfläche eines Objektes; und
- Fig. 10: eine Darstellung eines Lichtschnitt-Messverfahrens.

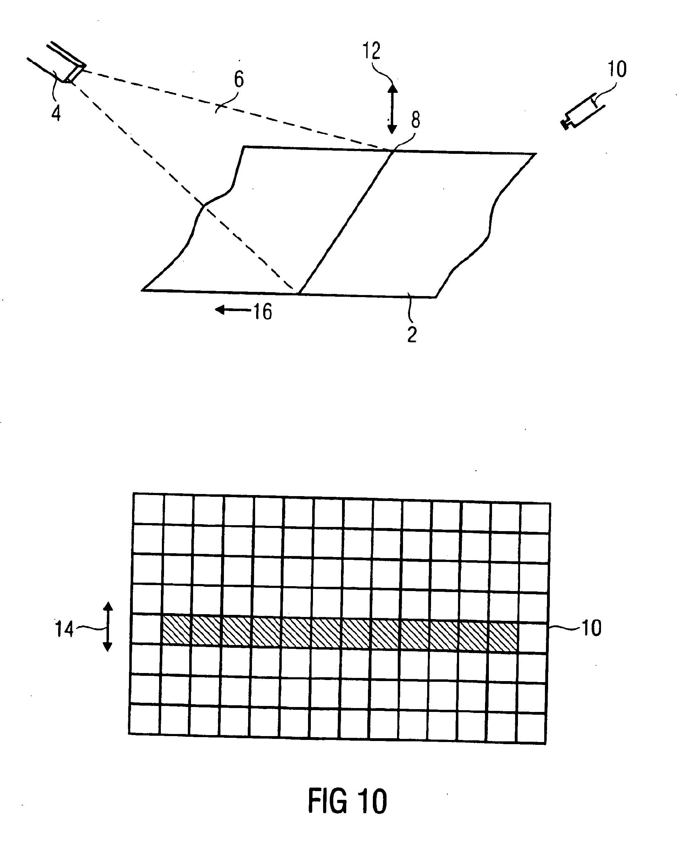

Da in den folgenden Absätzen das erfindungsgemäße Konzept zur Steigerung der Auflösung 3D-Messsystemen überwiegend am Beispiel eines Lichtschnittmessvefahrens diskutiert werden wird, soll anhand von Fig. 10 im Folgenden kurz die Funktionsweise eines Standard-Lichtschnittverfahrens dargestellt werden.

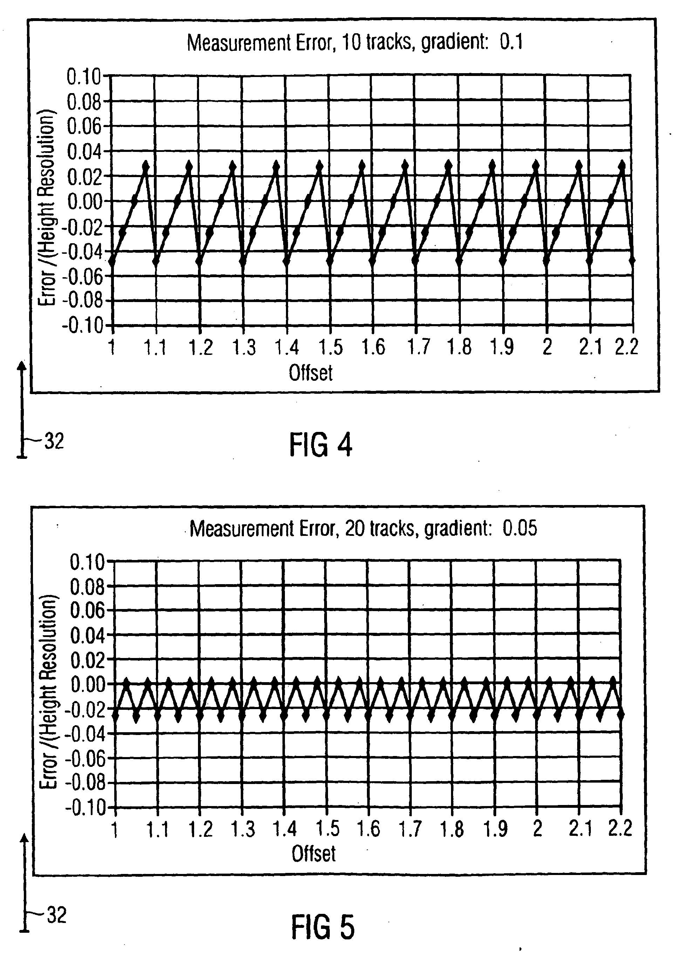

Fig. 10 zeigt dabei die Oberfläche eines zu vermessenden Objekts 2, einen Messlichtprojektors 4, welcher in eine Lichtebene bzw. eine Strahlungsebene 6 Licht bzw. Strahlung emittiert, so dass auf der Oberfläche des Objekts 2 ein Messlichtstreifen 8 erzeugt wird. Im in Fig. 10 vereinfacht gezeigten Fall einer perfekt ebenen Oberfläche 2 ist der Messlichtstreifen 8 die in Fig. 5 gezeigte Gerade.

Der Messlichtstreifen 8 wird mittels eines geeigneten Sensors 10 aufgezeichnet. Im in Fig. 5 gezeigten Beispiel ist der Sensor 10 ein zwei-dimensionaler Matrixsensor, wie beispielsweise eine CCD- oder ein CMOS-Sensor. Die genaue Art des Sensors ist für die Funktionsweise des erfindungsgemäßen Konzeptes nicht erheblich, es können generell auch andere Arten von Sensoren verwendet werden.

Wird auf der Oberfläche 2 des Objekts eine Messlichtlinie 8 als Gerade erzeugt, wird das Bild der Geraden, wie in Fig. 5 gezeigt, auf dem Sensor 10 abgebildet. Die Höheninformation ergibt sich nunmehr aus der Geometrie des Gesamtaufbaus, insbesondere aus der Relativposition des Sensors 10 und des Messlichtprojektors 4. Wird beispielsweise die Oberfläche 2 des Objekts in einer Richtung 12 bewegt, wird der Messlichtstreifen an anderer Position auf der Oberfläche 2 des Objekts erzeugt, da die Lichtebene 6 im Raum unverändert bleibt. Da auch der Sensor 10 ortsfest ist, wird auch das Bild der Messlichtlinie (symbolisiert durch schwarze Quadrate) auf dem Sensor in einer Richtung 14 variieren. Bei Kenntnis der Geometrie der Lichtebene 6 und des Sensors 10 kann also, wie oben beschrieben, auf die Position der Oberfläche 2 des Objekts in Richtung 12 geschlossen werden.

Äquivalente Überlegungen gelten, wenn die Oberfläche des Objekts nicht eben ist. Mittels des in Fig. 10 gezeigten Lichtschnittverfahrens kann somit Topographie-Information bzw. Höheninformation über die gesamte Breite der Oberfläche 2 mittels einer einzigen Aufnahme des Sensors 10 bestimmt werden.

Es werden für Lichtschnittmessverfahren spezialisierte Sensoren 10 verwendet, die in hoher Geschwindigkeit selbst eine Signalverarbeitung durchführen können, so dass diese beispielsweise lediglich die Information über den hellsten belichteten Pixel des Sensors 10 als Messergebnis zur Verfügung stellen. Solche hoch-spezialisierten Sensoren eignen sich daher insbesondere für eine schnelle Messung, da aufwändige Signalnachverarbeitung, wie sie beispielsweise bei einer herkömmlichen CCD erforderlich wird, vermieden werden kann.

Zusammenfassend weisen Lichtschnittmessverfahren also den erheblichen Vorteil auf, dass mit hoher Geschwindigkeit die Höheninformation entlang einer räumlich ausgedehnten Messlinie 8 erhalten werden kann.

Wird die Oberfläche 2 in einer Richtung senkrecht zur Messlichtlinie 8 und in einer Richtung 16 unter der Lichtebene bewegt und werden sukzessive Aufnahmen mittels des Sensors 10 durchgeführt, kann innerhalb kurzer Zeit die gesamte Topographie der Oberfläche 2 des zu untersuchenden Objekts bestimmt werden, was das Lichtschnittmessverfahren für den Einsatz bei der Vermessung räumlich ausgedehnter Oberflächen prädestiniert.

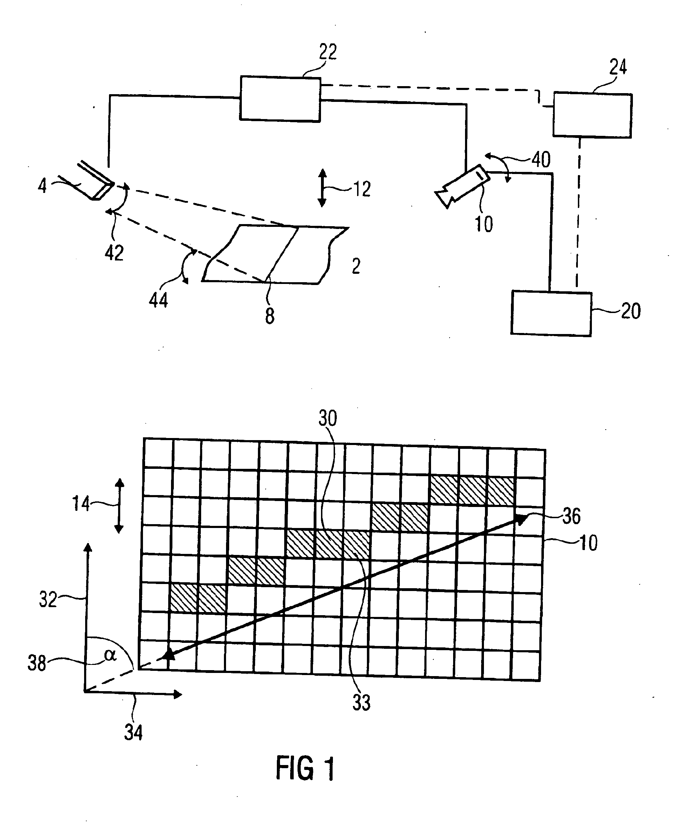

Fig. 1 zeigt ein optisches Messsystem zum Vermessen einer Oberfläche eines Objektes 2 mit eingestelltem Winkel zwischen einer Abbildungsrichtung und einer Quantisierungsrichtung.

Dargestellt sind die Einrichtung 4 zum Definieren einer Lichtebene 6, (Lichtprojektor 4), sowie der auf der Oberfläche des Objekts 2 erzeugte Messlichtstreifen 8. Obwohl nicht Teil der erfindungsgemäßen Vorrichtung bzw. des erfindungsgemäßen optische Messsystems ist das Objekt 2 hier der besseren Verständlichkeit wegen dargestellt. Darüber hinaus wird für die folgenden Betrachtungen vereinfachend davon ausgegangen, dass die Oberfläche des Objektes 2 perfekt eben ist. Darüber hinaus ist ein Sensor bzw. Matrixsensor 10 dargestellt, der beispielsweise in einer Kamera verbaut sein kann und der dazu dient, die im Folgenden als reale Abbildungsorte bezeichneten Abbildungsorte des Messlichtstreifens 8 auf der Oberfläche des Matrixsensors 10 zu detektieren. Das optische Messsystem besitzt ferner eine Auswerteeinrichtung 20, die die realen Abbildungsorte des Sensors erhält und weiter verarbeitet, um aus den realen Abbildungsorten effektive Abbildungsorte abzuleiten und somit, wie weiter unten detailliert beschrieben, die Höhenauflösung des in Fig. 1 gezeigten optischen Messsystems zu verbessern. Fig. 1 zeigt ferner eine optionale Auflösungsverbesserungseinrichtung 22, die mit dem Lichtprojektor 4, dem Matrixsensor 10 oder mit dem Objekt 2 bzw. mit einer das Objekt tragenden oder stützenden Einrichtung verbunden sein kann. Ferner ist in Fig. 1 eine optionale Kalibrierungseinrichtung 24 dargestellt, die mit der Auswerteeinrichtung 20 und der Auflösungsverbesserungseinrichtung 22 verbunden ist.

Bei einem Ausführungsbeispiel der vorliegenden Erfindung werden die realen Abbildungsorte des Messlichtstreifens auf dem Sensor, die in der vergrößerten Darstellung des Matrixsensors 10 als schraffierte Pixel dargestellt sind, von der Auswerteeinrichtung verarbeitet und es werden effektive Abbildungsorte berechnet, die eine Verbesserung der Höhenauflösung des optischen Messsystems von Fig. 1 zur Folge haben.

Dazu wird, wie in Fig. 1 gezeigt, ein einem realen Abbildungsort 30 zugeordneter effektiver Abbildungsort in einer Quantisierungsrichtung 32 dadurch bestimmt, dass zur Bestimmung des effektiven Abbildungsorts mindestens ein weiterer realer Abbildungsort 33, der dem realen Abbildungsort 30 in einer zur Quantisierungsrichtung 32 senkrechten Richtung 34 benachbart ist, berücksichtigt wird.

Bei einem Ausführungsbeispiel der vorliegenden Erfindung werden eine Gruppe symmetrisch um den realen Abbildungsort 30 angeordnete weiter reale Abbildungsorte verwendet, um den effektiven Abbildungsort, der dem realen Abbildungsort 30 zugeordnet ist, durch Mittelwertbildung sämtlicher berücksichtigter realer Abbildungsorte zu bestimmen.

Eine Auflösungsverbesserung kann nunmehr dadurch erzielt werden, dass die Höhenauflösung der in den Fig. 10 und 1 gezeigten Messsysteme, wie bereits anhand von Fig. 10 erläutert, sowohl durch die Geometrie der Anordnung, als auch durch die intrinsische Quantisierung der verwendeten Matrixsensoren limitiert ist. Bei den in Fig. 1 und 10 ist dabei die Quantisierung in Quantisierungsrichtung 32 der limitierende Faktor, da diese im Wesentlichen die Höhenkoordinate bestimmt, also diejenige Information beinhaltet, wie weit das Objekt 2 in Richtung 12 verschoben ist bzw. in wie weit die Topographie des Objekts 2 in einer Richtung 12 variiert. Eine Auflösungssteigerung kann dann erzielt werden, wenn entgegen dem Stand der Technik eine Abbildungsrichtung 36 des Messlichtstreifens 8 auf den Matrixsensor 10 nicht senkrecht zur Quantisierungsrichtung 32 verläuft, sondern mit dieser einem vorbestimmten, bei einigen Ausführungsbeispielen der vorliegenden Erfindung frei einstellbaren Winkel 38 bildet.

Um den Winkel 38 zu variieren bzw. einzustellen, ist es prinzipiell möglich, mittels der Auflösungsverbesserungseinrichtung 22 den Matrixsensor 10 gemäß einer ersten Rotationsrichtung 40 zu rotieren. Alternativ kann die Lichtebene 6 um eine Rotationsrichtung 42 oder das Objekt 2 um eine Rotationsrichtung 44 rotiert werden.

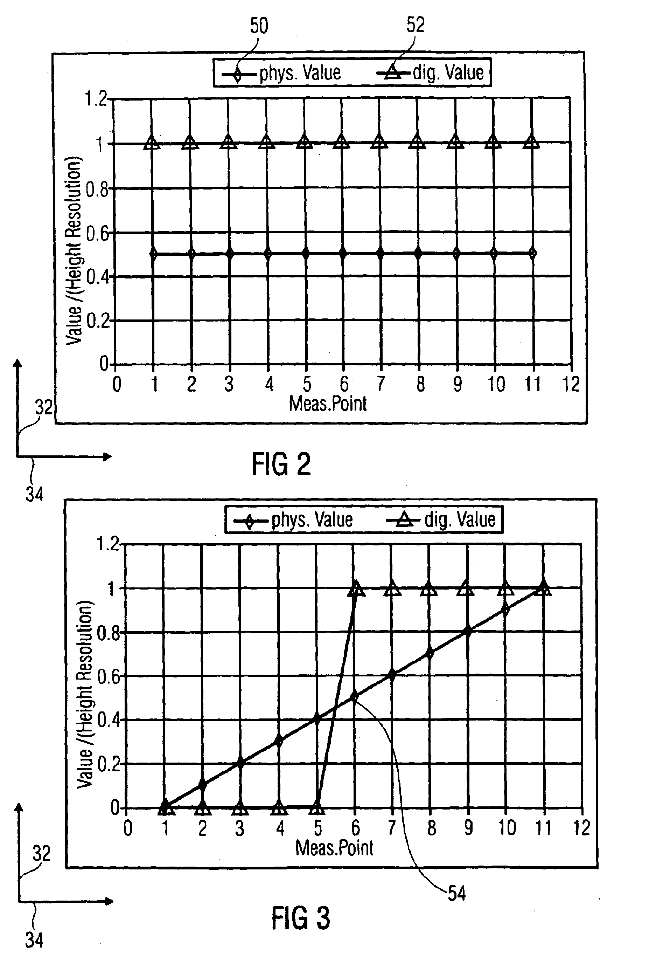

Wie erfindungsgemäß die Höhenauflösung des in Fig. 1 gezeigten optischen Messsystems verbessert werden kann, wird im Folgenden anhand der Fig. 2 bis 7 näher erläutert, wobei in den im Folgenden diskutierten Figuren Abbildungsorte des Messlichtstreifens 8 auf einem zweidimensionalen Matrixsensor 10 schematisch dargestellt sind.

Fig. 2 und 3 zeigen dabei in einer zweidimensionalen Darstellung Abbildungsorte des Lichtmessstreifens 8 auf der Sensoroberfläche, wobei in einer Richtung 34 die Nummer der betrachteten Pixelspalten aufgetragen ist und wobei in der Quantisierungsrichtung 32 die Koordinate in Quantisierungsrichtung 32 in Einheiten von Pixeln aufgetragen ist. Die Fig. 2 und 3 zeigen somit Simulationen realer Messsituationen, wobei physikalische Abbildungsorte 50 mit offenen Rauten und vom Sensor 10 digitalisiert ausgegebene reale Abbildungsorte durch offene Dreiecke 52 gekennzeichnet sind. Die physikalischen Abbildungsorte 50 bezeichnen somit den tatsächlichen, auf der Sensoroberfläche erzeugten Abbildungsort des Messlichtstreifens 8, wie er durch beispielsweise die Optik einer Kamera auf der Sensoroberfläche 10 erzeugt wird. Messfehler durch Quantisierung ergeben sich somit aus der Differenz der Koordinate der physikalischen Abbildungsorte 50 und der realen Abbildungsorte 52 in Quantisierungsrichtung 32.

Fig. 2 zeigt nun eine simulierte Messsituation für den Fall, dass die Digitalisierungsauflösung der 3D-Messtechnik einer Skaleneinheit auf der vertikalen Diagrammachse (Quantisierungsrichtung 32) entspricht. Die Messdaten mehrerer Messspuren (Spalten des Matrixsensors 10) sind horizontal aufgetragen (Richtung 34). Die zu vermessende Oberfläche (realer physikalischer Wert) ist in diesem Beispiel waagerecht und liegt parallel zum Auflösungsraster der Kamera, die Quantisierungsrichtung 32 ist also senkrecht zur Abbildungsrichtung des Messlichtstreifens 8. Liegt die Oberfläche, wie in Fig. 2 gezeigt, auf dem Höhenwert von 0,5 (in relativen Quantisierungseinheiten) so liegen die digitalisierten Höhenwerte, also die vom Sensor 10 gelieferten realen Abbildungsorte aufgrund der endlichen Digitalisierungsauflösung und der dadurch bedingten Rundung des Messwertes bei dem konstanten Wert 1, wie es in Fig. 2 dargestellt ist. In der in Fig. 2 gezeigten Konfiguration ist der Messfehler also maximal und beträgt 0,5, also eine halbe Auflösungsstufe bzw. Quantisierungsgröße. Allgemein gesprochen ergibt sich in diesem Fall eine Messgenauigkeit von ±0,5. Wird als Messwert der Mittelwert über mehrere benachbarte Punkte, beispielsweise über alle 11 dargestellten Messwerte verwendet, ändert sich an dem Fehler nichts, da alle Werte den gleichen Messfehler beinhalten. Dies zeigt unter Anderem, dass bei dem Stand der Technik entsprechenden Verfahren, wie sie in Fig. 10 dargestellt sind, eine Erhöhung der Messgenauigkeit so nicht erreicht werden kann. Zusätzlich sei angemerkt, dass die tatsächliche Höhenauflösung, also die Genauigkeit, mit der die Oberfläche in absoluten physikalischen Einheiten vermessen werden kann, auch von der Geometrie des optischen Messsystems abhängt. Im Folgenden werden lediglich die eine Auflösungsverbesserung ermöglichenden Effekte auf der Oberfläche des Matrixsensors 10 diskutiert.

Wird, wie in Fig. 3 gezeigt, beispielsweise die Messvorrichtung gegenüber der Oberfläche des Objekts 2 um den mittleren Messpunkt 54 (Messpunkt Nr. 6) verkippt, und wird als effektiver Messwert bzw. effektiver Abbildungsort für den mittleren Messpunkt 6 der arithmetische Mittelwert über 10 benachbarte Messpunkte verwendet, so ergibt sich ein neuer Wert, der eine wesentlich bessere Übereinstimmung mit dem tatsächlichen physikalischen Höhenwert 54 liefert. Dies resultiert daraus, dass durch die inhärente Quantisierung des Matrixsensors 10 einige Messwerte "0" und einigen Messwerte "1" werden. Die in Fig. 2 schematisch dargestellte Verkippung der Abbildungsrichtung 36 des Messlichtstreifens 8 kann dabei durch mehrere, in Fig. 1 beschriebene Rotationen um Rotationsrichtungen 40, 42 oder 44 erfolgen.

Dabei hängt der solchermaßen erzeugte effektive Abbildungs-ort des Messpunkts 6 von dem Winkel 38 der Verkippung ab. Justiert man die Verkippung beispielsweise so, dass, wie in Fig. 3 gezeigt, der Gradient der Verkippung (in willkürlichen Einheiten) 0,1 ist, d. h. dass lateral (in Richtung 34) beim elften Messpunkt der echte physikalische Wert bzw. Abbildungsort um genau eine Höhenauflösungsstufe angestiegen ist, und mittelt über benachbarte Messwerte, so ergibt sich ein Fehler zum physikalischen Abbildungsort 54 von ca. ±0,05. Im Vergleich zum in Fig. 2 gezeigten Beispiel wird die Höhenauflösung also etwa um einen Faktor 10 verbessert als im Fall ohne Verkippung.

Durch Einstellen des Winkels 38 lässt sich also die Messgenauigkeit steigern. Darüber hinaus wird die Erhöhung der Genauigkeit auch durch die Anzahl der zur Mittelwertbildung verwendeten realen Abbildungsorte bzw. Messpunkte beeinflusst. Somit lässt sich eine weitere Steigung der Messgenauigkeit erreichen, wenn die Verkippung und Mittelwertbildung entsprechend gewählt werden. Auflösungserhöhungen um Faktoren 20 oder 100 sind somit ohne Weiteres möglich. Es kann prinzipiell eine Höhenmessgenauigkeit erreicht werden, die unterhalb der optischen Auflösungsgrenze von ca. 1 µm liegt, auch wenn die Auflösung des Einzelpunkts in Quantisierungsrichtung um mehr als eine Größenordnung schlechter ist. Solche hohen Geometrie-Messgenauigkeiten können im Stand der Technik bei optischen Messsystemen nur durch Ausnutzung optischer Interferenzen erreicht werden, wie beispielsweise in Interferometern.

Das erfindungsgemäße Konzept hat dabei den besonderen Vorteil, dass die Messfrequenz des Gesamtsystems bzw. der verwendeten Sensoren bzw. Matrixsensoren nicht verringert werden muss, obwohl die Auflösung insgesamt signifikant verbessert werden kann. Es sei darauf hingewiesen, dass das dargestellte Verfahren zu einer entsprechenden Verringerung der lateralen Auflösung, also der Auflösung in Abbildungs-richtung 36 des Messlichtstreifens 8 führt. Dies kann aber in denjenigen Fällen in Kauf genommen werden, in denen die Messaufgabe in der Erfassung von vorzugsweise glatten, lateral gering strukturierten Objekten, besteht. Bei üblichen Lichtschnittsensor-Kameras liegt die Anzahl der Pixel bzw. Messpunkte in lateraler Richtung üblicherweise zwischen 1.000 und 2.000 Messpunkten bzw. Pixeln. Oftmals ist eine derart hohe Anzahl an Messpunkten über den zu erfassenden Bereich, d. h. eine derart hohe Messpunktdichte in lateraler Richtung nicht erforderlich. Daher kann eine entsprechende Reduzierung der lateralen Ortsauflösung zu Gunsten der Steigung der Höhenauflösung ohne Weiteres in Kauf genommen werden, insbesondere wenn Objekte untersucht werden sollen, die prinzipiell keine Höhensprünge auf kurzen Distanzen aufweisen können, weil beispielsweise das Herstellungsverfahren solche Fehler unterbindet.

Wie oben beschrieben, ist bei einem konstanten Gradienten der Verkippung, wie er beispielsweise in Fig. 3 gezeigt ist, die erreichbare Messgenauigkeit von der eigentlichen Höhe des Objekts, d. h. des Offsets zwischen Objekt und Messaufbau abhängig. Darüber hinaus ist die erzielbare Genauigkeit von der Anzahl der Mittelwertbildung verwendeten weiteren realen Abbildungsorte abhängig. Diese Abhängigkeit ist in den Abbildungen 3 und 4 dargestellt, die die Abhängigkeit des Messfehlers von Offset darstellen, wobei zwischen Fig. 3 und 4 beide Parameter, also sowohl der Gradient (Verkippungswinkel 38) als auch die Anzahl der zur Mittelung verwendeten an den Abbildungsorten variiert sind. Die Fig. 3 und 4 zeigen dabei auf der X-Achse den Offset, also eine gemeinsame Verschiebung sämtlicher physikalischer Abbildungsorte in Fig. 3 in Einheiten der Pixelauflösung, sowie auf der Y-Achse den sich daraus ergebenden Fehler bei der Bestimmung des Messfehlers des sechsten Messpunkts 54 von Fig. 3.

Für Abbildung 3 ist der gewählte Gradient 0,1 und es wird über zehn benachbarte Werte gemittelt. Die Messsimulation zeigt, dass bei dieser Konfiguration unabhängig vom Offset ein mittlerer Messfehler von ±0,031 zu erwarten ist, der im Extremfall -0,05 oder +0,025 betragen kann.

In der in Fig. 5 gezeigten Konfiguration, bei der über 20 benachbarte reale Abbildungsorte gemittelt wird und der ein Gradient von 0,05 zugrunde liegt, ergibt sich ein mittlerer Messfehler von 0,018 mit maximalen Fehleramplituden von - 0,025 und +0,0. Dies entspricht also in etwa einer Halbierung des Messfehlers, wie er in Fig. 4 dargestellt ist.

Durch Anwendung des erfindungsgemäßen Konzeptes ist es somit auf äußerst flexible Art und Weise möglich, den Messfehler eines Lichtschnittverfahrens auf die erforderlichen Toleranzen einzustellen. Dabei kann die anhand der Fig. 4 und 5 gezeigte signifikante Verbesserung der Messgenauigkeit bzw. Erhöhung der Höhenauflösung allein dadurch erreicht werden, dass der Gradient bzw. der Winkel 38 optimiert und dass gegebenenfalls die Anzahl der zur Mittelwertbildung verwendeten benachbarten realen Abbildungsorte passend variiert wird.

Um die laterale Auflösungsverringerung zu begrenzen, kann alternativ zur bloßen Mittelwertbildung die Bildung einer gewichteten Summe benachbarter realer Abbildungsorte treten. Durch geeignete Wahl der Gewichte kann somit sowohl die Höhenauflösung des Systems verbessert werden als auch die damit einhergehende laterale Auflösungsverschlechterung innerhalb eines akzeptablen Rahmens eingestellt werden.

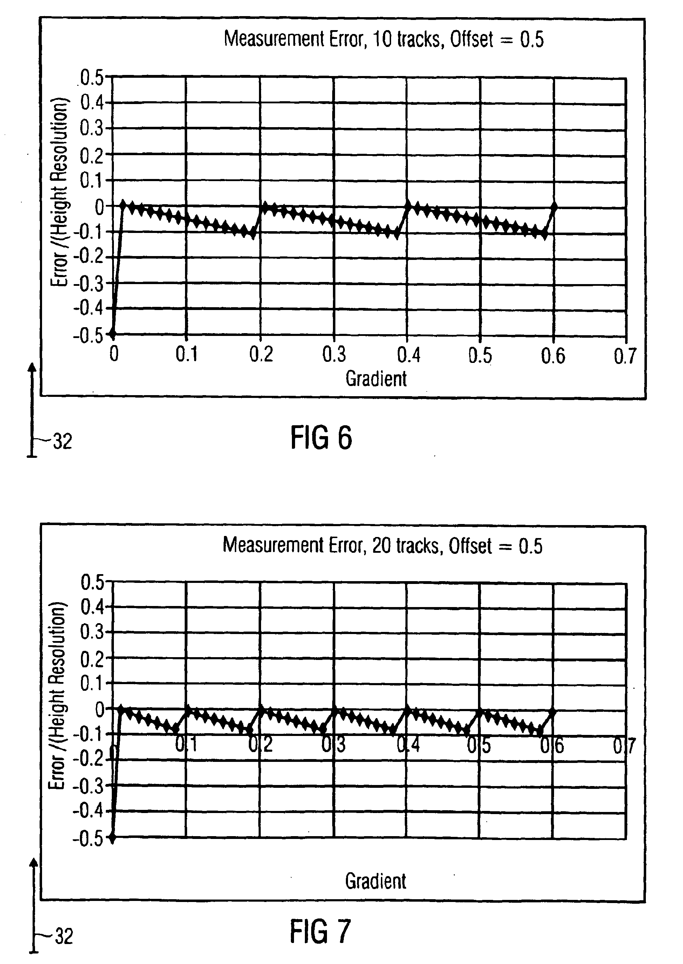

Die Fig. 6 und 7 illustrieren die Abhängigkeit des Messfehlers von tatsächlich eingestellten Verkippungsgradienten (Winkel 38) bei einem gleich bleibenden Höhen-Offsetwert, der in den in den Fig. 6 und 7 gezeigten Beispielen 0,5 beträgt. In Abbildung 6 wird dabei über zehn Werte gemittelt, in Abbildung 7 über 20. Wie es Fig. 6 zu entnehmen ist, reduziert sich durch die Mittlung über zehn Werte der maximale Messfehler auf 0,049 wobei abhängig von der Größe des Gradienten bzw. des Winkels 38 Messfehler im Bereich zwischen 0 und 0,094 auftreten können. Wie es in Fig. 7 gezeigt ist, kann durch die Erhöhung der zur Mittelung verwendete Messpunktzahl eine weitere Verringerung des Messfehlers erreicht werden. In der in Fig. 7 gezeigten Konfiguration verringert sich der mittlere Fehler im Vergleich zu Fig. 6 in etwa auf den halben Wert, nämlich von 0,056 auf ca. 0,022.

Unter Ausnutzung der anhand der Fig. 2 bis 7 detaillierten beschriebenen Abhängigkeiten kann ein optischen Lichtschnittmesssystem bzw. ein 3D-Messsystem geometrisch justiert werden, bis eine gewünschte Verbesserung des zu erwartenden Messfehlers eingetreten ist. Diese Justage kann prinzipiell bei der Inbetriebnahme eines solchen Systems an die Geometrie der Oberfläche händisch durchgeführt werden, falls nicht zu erwarten ist, dass sich die Geometrie der Anwendung über die Zeit nicht verändert.

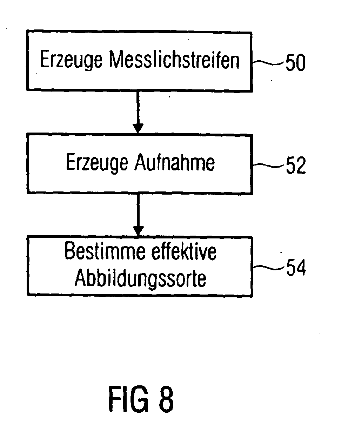

Um das anhand von Fig. 8 beschriebene Verfahren zum Vermessen einer Oberflächen eines Objektes jedoch flexibel und für mehrere mögliche Anwendungsfälle nutzen zu können, wird gemäß einem weiteren Ausführungsbeispiel der Erfindung die optimale Ausrichtung der Messeinheit (beispielsweise der Lichtschnitt-Messeinheit) gegenüber der zu erfassenden Oberfläche durch eine automatische Justiereinrichtung bzw. eine Kalibrationseinrichtung 24 gewährleistet. Wie anhand von Fig. 1 gezeigt, kann die automatische Justierung dabei durch eine motorische Verstellung bzw. Rotation des gesamten Messkopfes, von Teilen eines industriell erhältlichen Messkopfes, also etwa durch Rotation des Sensors 10, des Lichtprojektors 4 oder etwa nur der Lichtebene 6 mittels einer geeigneten Optik (etwa unter Verwendung von Spiegeln oder Mikrospiegeln) geschehen. Alternativ kann auch das Objekt bzw. der Objektträger entlang der Richtung 44 rotiert werden. Die Information über die optimale Ausrichtung kann sequentiell aus vorangegangenen Messdaten gewonnen und auf die zu erwartenden nächsten Messpunkte extrapoliert werden, indem die optimale Winkelstellung zwischen Oberfläche und Messanordnung berechnet wird. Alternativ kann über eine regelmäßige (periodische oder aperiodische) Verkippung der Messtechnik oder des Lichtweges eine Testmessung mit sämtlichen möglichen Konfigurationen durchgeführt werden, um eine optimale Anpassung des Winkels 38 bzw. der zur Mittelung zu verwendenden weiteren realen Abbildungsorte zu erreichen.

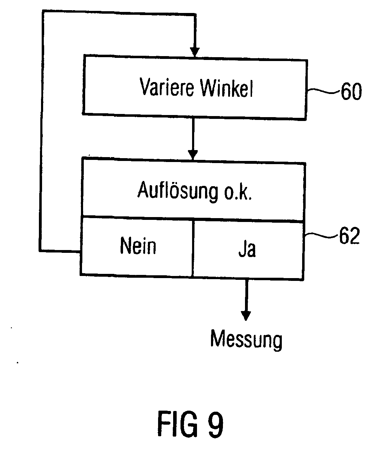

Während der Messung selbst kann eine regelmäßige periodische oder aperiodische Verkippung der Messtechnik oder des Lichtweges ebenfalls verwendet werden, wobei dann bei einer entsprechend hohen Messfrequenz und daraus resultierender zeitlicher Überabtastung nur diejenigen Daten verwendet werden können, in der der Winkel 38 im Sinne der gewünschten Steigung der Auflösung optimal ist. Das heißt, nur die Daten mit jeweils optimaler Just age werden benutzt. Wie in Fig. 1 beschrieben, kann zu einer solchen automatischen Kalibration eine Kalibrationseinrichtung 23 vorgesehen sein, die mit der Auswerteinrichtung 20 und der Auflösungsverbesserungseinrichtung 22 verbunden ist, um das anhand von Fig. 9 beschriebenen Verfahren zum Verbessern der Auflösung eines dreidimensionalen geometrischen Messsystems durchzuführen. Ein solches Lichtschnitt-Messsystem mit automatischer Anpassung der Orientierung der Messeinheit gegenüber der zu vermessenden Oberfläche unter Verwendung der Kalibrationseinrichtung 24 ist also in Fig. 1 bereits gezeigt. Dabei wird zunächst eine Bestimmung des optimalen Verstellwinkels anhand der aufgenommenen Daten durchgeführt. Eine darauf folgende motorische Verstellung beispielsweise der Messeinheit auf einen optimalen Kippwinkel kann dann für nachfolgende Messungen durchgeführt werden.

Fig. 8 zeigt anhand eines Blockdiagramms die Durchführung des erfindungsgemäßen Verfahrens zum Vermessen einer Oberfläche eines Objektes.

In einem Bereitstellungsschritt 50 wird eine Lichtebene definiert, um einen Messlichtstreifen auf der Oberfläche eines Objektes zu erzeugen.

In einem Bildaufnahmeschritt 52 werden reale Abbildungsorte des Messlichtstreifens in einer Quantisierungsrichtung mit durch Quantisierung begrenzter Auflösung und einer dazu senkrechten Richtung auf einem Sensor erzeugt.

In einem Auswerteschritt 54 werden in Quantisierungsrichtung effektive Abbildungsorte basierend auf den zugeordneten realen Abbildungsorten und zumindest einem weiteren realen Abbildungsort, welcher dem zugeordneten realen Abbildungsort in der zu Quantisierungsrichtung senkrechten Richtung benachbart ist, erzeugt.

Gemäß einem Ausführungsbeispiel der vorliegenden Erfindung kann die Anzahl der zusätzlich verwendeten weiteren realen Abbildungsorte variiert werden, bzw. fest eingestellt sein, um Anforderungen an die zu erzielende Messgenauigkeit des Messsystems erfüllen zu können.

Fig. 9 zeigt anhand eines Blockdiagramms ein Beispiel eines Verfahrens zur Verbesserung der Auflösung eines Lichtschnittmesssystems.

In einem Variationsschritt 60 wird ein Winkel zwischen einer Abbildungsrichtung des Messlichtstreifens auf dem Sensor und einer Quantisierungsrichtung des Sensors variiert. In einem Überprüfschritt 62 wird überprüft, ob die Auflösung innerhalb eines vorbestimmten Auflösungsinterballs liegt oder nicht. Ist dies nicht der Fall, wird erneut der Variationsschritt 60 durchgeführt, um den Winkel 38 weiter zu variieren. Wird festgestellt, dass die Auflösung innerhalb des vorbestimmten Auflösungsintervalls befindlich ist, wird das Verfahren zur Verbesserung der Auflösung eines Lichtschnittmesssystems beendet und die Messung der Oberflächentopographien zu untersuchender Objekte kann begonnen werden.

Durch die Anwendung des erfindungsgemäßen Konzeptes, bzw. des erfindungsgemäßen Verfahrens und einer entsprechenden Vorrichtung wird eine deutliche Steigerung der Messgenauigkeit von digitalen 3D-Geometriemesssystemen ermöglicht. Die zu erwartende Auflösungssteigerung ist besonders bei der Vermessung von flachen, d. h. lateral vergleichsweise wenig strukturierten Oberflächen von Objekten signifikant.

Die erzeugende Verbesserung demgegenüber dem Stand der Technik ergibt sich aus der Steigerung der Höhenauflösung und dadurch der Messgenauigkeit der digitalen 3D-Geometrie-Messsysteme von beispielsweise 1:1.000 auf 1:1.0000, d. h. der abgetastete Höhenmessbereich kann mit einer wesentlich höheren Messgenauigkeit erfasst werden.

Obwohl dabei das erfindungsgemäße Konzept in den vorhergehenden Abschnitten am Beispiel eines Lichtschnitt-Messverfahrens beschrieben wurde, ist die Anwendung des erfindungsgemäßen Konzeptes nicht auf solche LichtschnittMessverfahren beschränkt.

Vielmehr kann die Auflösung beliebiger anderer Verfahren durch die Anwendung des erfindungsgemäßen Konzeptes gesteigert werden, wenn diese digitalisierend sind bzw. in einer Messrichtung quantisierte Messwerte erzeugen. Dies kann beispielsweise unter Anderem bei Röntgen-Messverfahren der Fall sein, die mittels Matrix-Sensoren oder andersartig segmentierten Sensoren, wie beispielsweise eines Arrays von Drift-Kammern oder Zählrohren, durchgeführt werden. Das erfindungsgemäße Verfahren zur Auflösungssteuerung kann dabei auch auf einem Computer durchgeführt werden.

Als Sensoren für optische Lichtschnittmessverfahren kommen nicht lediglich die anhand der vorhergehenden Beispiele diskutierten CCD- oder CMOS-Sensoren in Betracht. Vielmehr kann jeder andere Detektortyp verwendet werden, der eine quantisierte Abbildungseigenschaft besitzt. Dies können beispielsweise auch Photomultiplayerarrays sein, die mittels Lichtleiterfasern, welche wiederum zu einem Faser-Array kombiniert sind, angekoppelt werden.

Abhängig von den Gegebenheiten kann das erfindungsgemäße Verfahren zum Vermessen einer Oberfläche eines Objektes oder das Verfahren zum Verbessern der Auflösung eines Lichtschnittmesssystems in Hardware oder in Software implementiert werden. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, dass das erfindungsgemäße Verfahren zum Vermessen einer Oberfläche eines Objektes oder das Verfahren zum Verbessern der Auflösung eines Lichtschnittmesssystems ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

## Patentansprüche

1. Optisches Messsystem zum Vermessen einer Oberfläche eines Objektes (2), mit folgenden Merkmalen:
einer Einrichtung (4) zum Definieren einer Strahlungsebene (6), um einen Messstreifen (8) auf der Oberfläche des Objektes (2) zu erzeugen;
einem Matrixsensor (10), dessen eine Sensorachse in einer Quantisierungsrichtung (32) verläuft, in der eine Höheninformation für die Oberfläche des Objekts bestimmt wird, und dessen andere, orthogonale Sensorachse in einer lateralen Richtung (34) verläuft, wobei der Sensor (10) eine in der Quantisierungsrichtung (32) durch Quantisierung begrenzte Auflösung besitzt und der Matrixsensor (10) weiterhin dazu ausgebildet ist, detektierte reale Abbildungsorte (30, 33) des Messstreifens (8) auf dem Matrixsensor (10) durch Anfertigen einer Aufnahme des auf der Oberfläche des Objekts (2) erzeugten Messstreifens (8) zu erhalten, wobei der abgebildete Messstreifen (8) in einer Abbildungsrichtung (36) verläuft;
einer Auswerteeinrichtung (20), die ausgebildet ist, um einen effektiven Abbildungsort des Messstreifens (8) in Quantisierungsrichtung (32) basierend auf dem zugeordneten realen Abbildungsort (30) und zumindest einem weiteren realen Abbildungsort (33) des Messstreifens (8), der dem zugeordneten realen Abbildungs-ort (30) in der lateralen Richtung (34) benachbart ist, zu erhalten; und
einer Auflösungsverbesserungseinrichtung (22), die ausgebildet ist, einen Winkel (38) zwischen der Abbildungsrichtung (36) und der Quantisierungsrichtung (32) so zu variieren, dass die Abbildungsrichtung (36) nicht senkrecht zur Quantisierungsrichtung (32) verläuft, um die Höhenauflösung des Messsystems zu verbessern.

2. Optisches Messsystem gemäß Patentanspruch 1, bei dem die Auswerteeinrichtung ausgebildet ist, den effektiven Abbildungsort basierend auf einer Anzahl weiterer realer benachbarter Abbildungsorte zu erhalten, die dem realen Abbildungsort in der lateralen Richtung (34) benachbart sind.

3. Optisches Messsystem gemäß Patentanspruch 1 oder 2, bei dem die Auswerteeinrichtung ausgebildet ist, um den effektiven Abbildungsort durch Mittelung des zugeordneten realen Abbildungsortes und der weiteren realen Abbildungsorte zu erhalten.

4. Optisches Messsystem gemäß einem der vorhergehenden Ansprüche, bei dem der Matrixsensor ausgebildet ist, als reale Abbildungsorte in Quantisierungsrichtung (32) die Koordinaten desjenigen Matrixsensorelements zu erhalten, das bei fester lateraler Richtung (34) in Quantisierungsrichtung (32) eine maximale Intensität aufweist.

5. Optisches Messsystem gemäß einem der vorhergehenden Ansprüche, bei dem die Auflösungsverbesserungseinrichtung (22) ausgebildet ist, eine Variation einer Orientierung der Strahlungsebene (6) durchzuführen.

6. Optisches Messsystem gemäß einem der vorhergehenden Ansprüche, bei dem die Auflösungsverbesserungseinrichtung (22) ausgebildet ist, um die Einrichtung (4) zum Definieren einer Strahlungsebene (6) mechanisch zu bewegen.

7. Optisches Messsystem gemäß einem der vorhergehenden Ansprüche, bei dem die Auflösungsverbesserungseinrichtung (22) eine Einrichtung umfasst, um das Objekt mechanisch zu bewegen.

8. Optisches Messsystem gemäß einem der einem der vorhergehenden Ansprüche, bei dem die Auflösungsverbesserungseinrichtung eine Sensorbewegungseinrichtung umfasst, um eine Variation der Orientierung der Quantisierungsrichtung (32) des Sensors durchzuführen.

9. Optisches Messsystem gemäß einem der einem der vorhergehenden Ansprüche, das zusätzlich eine Kalibrationseinrichtung (24) aufweist, die ausgebildet ist, den Winkel (38) so zu bestimmen, dass bei einem Objekt (2) mit einer ebenen Oberfläche der erhaltene effektive Abbildungsort innerhalb eines vorbestimmten Intervalls um einen physikalischen Abbildungsort des Messstreifens (8) auf dem Sensor (10) liegt.

10. Optisches Messsystem gemäß Anspruch 9, bei dem die Kalibrationseinrichtung (24) ausgebildet ist, die Auflösungsverbesserungseinrichtung (22) zu steuern, um den Winkel (38) zu variieren.

11. Optisches Messsystem gemäß Anspruch 9 oder 10, bei dem die Kalibrationseinrichtung (24) ausgebildet ist, um die Anzahl der von der Auswerteeinrichtung (20) verwendeten benachbarten realen Abbildungsorte (2) variieren.

12. Verfahren zum Vermessen einer Oberfläche eines Objektes, mit folgenden Schritten:
Definieren einer Strahlungsebene, um einen Messstreifen auf der Oberfläche des Objektes zu erzeugen;
Anfertigen einer Aufnahme des auf der Oberfläche des Objekts (2) erzeugten Messstreifens (8) mittels eines Matrixsensors, dessen eine Sensorachse in einer Quantisierungsrichtung verläuft, in der eine Höheninformation für die Oberfläche des Objekts bestimmt wird, und dessen andere, orthogonale Sensorachse in einer lateralen Richtung (34) verläuft, wobei der Sensor (10) eine in der Quantisierungsrichtung (32) durch Quantisierung begrenzte Auflösung besitzt, wobei durch die Anfertigung der Aufnahme, detektierte, reale Abbildungsorte (30, 33) des Messstreifens (8) auf dem Matrixsensor erzeugt werden, wobei der abgebildete Messstreifen in einer Abbildungsrichtung (36) verläuft;
Variieren eines Winkels (38) zwischen der Abbildungs-richtung (36) und der Quantisierungsrichtung (32) so, dass die Abbildungsrichtung (36) nicht senkrecht zur Quantisierungsrichtung (32) verläuft, um die Höhenauflösung des Messsystems zu verbessern; und
Erhalten effektiver Abbildungsorte des Messstreifens (8) in Quantisierungsrichtung (32), basierend auf einem zugeordneten realen Abbildungsort (30) und zumindest einem weiteren realen Abbildungsort (33) des Messstreifens (8), der dem zugeordneten realen Abbildungsort (30) in der lateralen Richtung (34) benachbart ist.

13. Verfahren gemäß Anspruch 12, das folgenden zusätzlichen Schritt aufweist:
Variieren einer Anzahl weiterer benachbarter realer Abbildungsorte.

## Claims

1. Optical measurement system for measuring a surface of an object (2), comprising:
a means (4) for defining a radiation plane (6), in order to generate a measurement strip (8) on the surface of the object (2);
a matrix sensor (10), whose one sensor axis runs in a quantization direction (32), in which height information for the surface of the object is determined, and whose other orthogonal sensor axis runs in a lateral direction (34), wherein the sensor (10) has a resolution limited by quantization in the quantization direction (32), and the matrix sensor (10) is further formed to acquire detected real mapping locations (30, 33) of the measurement strip (8) on the matrix sensor (10) by making a capture of the measurement strip (8) generated on the surface of the object (2), wherein the mapped measurement strip (8) runs in a mapping direction;
an evaluation means (20) formed to acquire an effective mapping location of the measurement strip (8) in quantization direction (32) on the basis of the associated real mapping location (30) and at least one further real mapping location (33) of the measurement strip (8) adjacent to the associated real mapping location (30) in the lateral direction (34); and
a resolution improvement means (22) that is formed to vary an angle (38) between mapping means (36) and quantization means (32) such that the mapping direction (36) does not run perpendicular to the quantization direction (32) to improve the height resolution of the measurement system.

2. Optical measurement system according to claim 1, wherein the evaluation means is formed to obtain the effective mapping location on the basis of a number of further real adjacent mapping locations adjacent to the real mapping location in the lateral direction (34).

3. Optical measurement system according to claim 1 or 2, wherein the evaluation means is formed to obtain the effective mapping location by averaging the associated real mapping location and the further real mapping locations.

4. Optical measurement system according to one of the preceding claims, wherein the matrix sensor is formed to obtain, as real mapping locations in quantization direction (32), the coordinates of that matrix sensor element comprising maximum intensity in quantization direction (32) with fixed lateral direction (34).

5. Optical measurement system according to one of the preceding claims, wherein the resolution improvement means (22) is formed to perform variation of an orientation of the radiation plane (6).

6. Optical measurement system according to one of the preceding claims, wherein the resolution improvement means (22) is formed to mechanically move the means (4) for defining a radiation plane (6).

7. Optical measurement system according to one of the preceding claims, wherein the resolution improvement means (22) includes a means to mechanically move the object.

8. Optical measurement system according to one of the preceding claims, wherein the resolution improvement means includes a sensor movement means to perform variation of the orientation of the quantization direction (32) of the sensor.

9. Optical measurement system according to one of the preceding claims, additionally comprising a calibration means (24) formed to determine the angle (38) so that, in the case of an object (2) with a planar surface, the effective mapping location acquired lies within a predetermined interval around a physical mapping location of the measurement strip (8) on the sensor (10).

10. Optical measurement system according to claim 9, wherein the calibration means (24) is formed to control the resolution improvement means (22) to vary the angle (38).

11. Optical measurement system according to claims 9 or 10, wherein the calibration means (24) is formed to vary the number of neighboring real mapping locations (2) used by the evaluation means (20).

12. Method of measuring a surface of an object, comprising:
defining a radiation plane to generate a measurement strip on the surface of the object;
making a capture of the measurement strip (8) generated on the surface of the object (2) by means of a matrix sensor, whose one sensor axis runs in a quantization direction (32), in which height information for the surface of the object is determined, and whose other orthogonal sensor axis runs in a lateral direction (34), wherein the sensor (10) has a resolution limited by quantization in the quantization direction (32), wherein, by making the capture, detected real mapping locations (30, 33) of the measurement strip (8) are generated on the matrix sensor, wherein the mapped measurement strip runs in a mapping direction (36);
varying an angle (38) between the mapping direction (36) and the quantization direction (32) such that the mapping direction (36) does not run perpendicular to the quantization direction (32) to improve the height resolution of the measurement system; and
acquiring effective mapping locations of the measurement strip (8) in quantization direction (32) on the basis of an associated real mapping location (30) and at least one further real mapping location (33) of the measurement strip (8) adjacent to the associated real mapping location (30) in the lateral direction (34).

13. Method according to claim 12, further comprising additionally:
varying a number of further adjacent real mapping locations.

## Revendications

1. Système de mesure optique pour mesurer une surface d'un objet (2), aux caractéristiques suivantes:
un moyen (4) destiné à définir un plan de rayonnement (6), pour générer une bande de mesure (8) sur la surface de l'objet (2);
un capteur matriciel (10) dont un axe de capteur s'étend dans une direction de quantification (32), dans lequel est déterminée une information de hauteur pour la surface de l'objet, et dont l'autre axe de capteur orthogonal s'étend dans une direction latérale (34), le capteur (10) possédant une résolution limitée par la quantification dans la direction de quantification (32) et le capteur matriciel (10) est réalisé par ailleurs pour obtenir des emplacements de reproduction réels détectés (30, 33) de la bande de mesure (8) sur le capteur matriciel (10) en réalisant une prise de vue de la bande de mesure (8) générée sur la surface de l'objet (2), la bande de mesure (8) reproduite s'étendant dans une direction de reproduction (36);
un moyen d'évaluation (20) qui est réalisé pour obtenir un emplacement de reproduction effectif de la bande de mesure (8) dans la direction de quantification (32) sur base de l'emplacement de reproduction réel (30) associé et au moins un autre emplacement de reproduction réel (33) de la bande de mesure (8) adjacent à l'emplacement de reproduction réel (30) associé dans la direction latérale (34); et
un moyen d'amélioration de résolution (22) qui est réalisé pour faire varier un angle (38) entre la direction de reproduction (36) et la direction de quantification (32) de sorte que la direction de reproduction (36) ne s'étende pas perpendiculairement à la direction de quantification (32), pour améliorer la résolution de hauteur du système de mesure.

2. Système de mesure optique selon la revendication 1, dans lequel le moyen d'évaluation est réalisé pour obtenir l'emplacement de reproduction effectif sur base d'un nombre d'autres emplacements de reproduction adjacents réels qui sont adjacents à l'emplacement réel dans la direction latérale (34).

3. Système de mesure optique selon la revendication 1 ou 2, dans lequel le moyen d'évaluation est réalisé pour obtenir l'emplacement de reproduction effectif par établissement de la moyenne de l'emplacement de reproduction réel associé et des autres emplacements de reproduction réels.

4. Système de mesure optique selon l'une des revendications précédentes, dans lequel le capteur matriciel est réalisé pour obtenir, comme emplacements de réalisation réels dans la direction de quantification (32), les coordonnées de l'élément de capteur matriciel qui présente, à direction latérale fixe (34) dans la direction de quantification (32), une intensité maximale.

5. Système de mesure optique selon l'une des revendications précédentes, dans lequel le moyen d'amélioration de résolution (22) est réalisé pour effectuer une variation d'une orientation du plan de rayonnement (6).

6. Système de mesure optique selon l'une des revendications précédentes, dans lequel le moyen d'amélioration de résolution (22) est réalisé pour déplacer le moyen (4) destiné à définir mécaniquement un plan de rayonnement (6).

7. Système de mesure optique selon l'une des revendications précédentes, dans lequel le moyen d'amélioration de résolution (22) comporte un moyen pour déplacer l'objet mécaniquement.

8. Système de mesure optique selon l'une des revendications précédentes, dans lequel le moyen d'amélioration de résolution comporte un moyen de déplacement de capteur destiné à effectuer une variation de l'orientation de la direction de quantification (32) du capteur.

9. Système de mesure optique selon l'une des revendications précédentes, qui présente en outre un moyen d'étalonnage (24) qui est réalisé pour déterminer l'angle (38) de sorte que pour un objet (2) à surface plane l'emplacement de reproduction effectif obtenu se situe dans un intervalle prédéterminé autour d'un emplacement de reproduction physique de la bande de mesure (8) sur le capteur (10).

10. Système de mesure optique selon la revendication 9, dans lequel le moyen d'étalonnage (24) est réalisé pour commander le moyen d'amélioration de résolution (22) pour faire varier l'angle (38).

11. Système de mesure optique selon la revendication 9 ou 10, dans lequel le moyen d'étalonnage (24) est réalisé pour faire varier le nombre d'emplacements de reproduction réels adjacents utilisés (2) par le moyen d'évaluation (20).

12. Procédé de mesure d'une surface d'un objet, aux étapes suivantes consistant à:
définir un plan de rayonnement, pour générer une bande de mesure sur la surface de l'objet;
réaliser une prise de vue de la bande de mesure (8) générée sur la surface de l'objet (2) à l'aide d'un capteur matriciel dont un axe de capteur s'étend dans une direction dans laquelle est déterminée une information de hauteur pour la surface de l'objet et dont l'autre axe de capteur orthogonal s'étend dans une direction latérale (34), le capteur (10) possédant une résolution limitée par la quantification dans la direction de quantification (32), les emplacements de reproduction réels (30, 33) détectés par la réalisation de la prise de vue de la bande de mesure (8) étant générés sur le capteur matriciel, la bande de mesure reproduite s'étendant dans une direction de reproduction (36);
faire varier un angle (38) entre la direction de reproduction (36) et la direction de quantification (32) de sorte que la direction de reproduction (36) ne s'étende pas perpendiculairement à la direction de quantification (32), pour améliorer la résolution de hauteur du système de mesure; et
obtenir des emplacements de reproduction effectifs de la bande de mesure (8) dans la direction de quantification (32) sur base d'un emplacement de reproduction réel (30) associé et d'au moins un autre emplacement de reproduction réel (33) de la bande de mesure (8) qui est adjacent à l'emplacement de reproduction réel (30) associé dans la direction latérale (34).

13. Procédé selon la revendication 12, qui présente l'étape additionnelle suivante consistant à:
faire varier un nombre d'autres emplacements de reproduction réels adjacents.
